# EUROPEAN PATENT APPLICATION

(11) **EP 4 807 354 A1**
(43) Date of publication of application: **16.09.2026**
(21) Application number: 24888836.4
(22) Date of filing: 11.11.2024
(51) Int. Cl.: G01N 27/04, G01N 27/12

(54) **HYDROGEN SENSOR AND HYDROGEN DETECTION SYSTEM**

(30) Priority: 10.11.2023 JP 2023192233
(71) Applicant: Dai Nippon Printing Co., Ltd., Tokyo 162-8001 (JP)
(72) Inventor: ITOH, Nobuyuki, Tokyo 162-8001 (JP); MISHIMA, Satoru, Tokyo 162-8001 (JP)
(74) Representative: Müller-Boré & Partner Patentanwälte PartG mbB
(86) International application number: PCT/JP2024/039976
(87) International publication number: WO 2025/100545

(57) **Abstract**

The present disclosure provides a hydrogen sensor comprising: a substrate; a sensitive film that is disposed on a first surface of the substrate, and that includes a catalyst dissociating hydrogen molecules, and tungsten oxide; a pair of electrodes disposed on the first surface of the substrate so as to be in contact with the sensitive film; and an IC tag connected to the pair of electrodes, wherein the IC tag includes an IC chip, an antenna connected to the IC chip, and a pair of terminals for sensor connected to the IC chip, and respectively connected to the pair of electrodes; the IC chip is an open short type in which the IC chip determines a high resistance state when a resistance value between the terminals for sensor is equal to or more than a first threshold resistance value, and the IC chip determines a low resistance state when the resistance value between the terminals for sensor is equal to or less than a second threshold resistance value less than the first threshold resistance value; and when a hydrogen concentration is zero, the resistance value between the terminals for sensor is equal to or more than the first threshold resistance value, and when the hydrogen concentration is a set value, the resistance value between the terminals for sensor is equal to or less than the second threshold resistance value.

## Description

### Technical Field

The present disclosure relates to a hydrogen sensor and a hydrogen detection system.

### Background Art

In recent years, from the viewpoint of global environmental protection and prevention of fossil fuel depletion, clean and circulating energy is desired. In particular, research for using hydrogen gas as an energy source has been actively performed around the fuel cell. On the other hand, hydrogen gas has an explosion limit concentration of 4% to 75%, which is wide. Thus, in order to widely use hydrogen gas as an energy source, handling such as storage and transportation of hydrogen and a safety device against hydrogen leakage are indispensable.

For example, although odor used in city gas is considered, in the case of hydrogen gas, problems such as poisoning of the fuel cell and deterioration of the gas turbine occur. For this reason, a safety measure in place of the odor is required. Then, in order to ensure safety, a hydrogen sensor that detects leakage of hydrogen gas is very important.

In the conventional hydrogen sensor, a contact combustion method or a semiconductor method is mainly used. In the contact combustion type hydrogen sensor, a catalyst metal such as platinum or palladium is heated by a heater, and hydrogen gas in contact with the catalyst is oxidized by oxygen in the air. The heat generated by the oxidation action of the hydrogen gas is electrically detected as a change in the conductivity of the catalyst metal. In addition, the semiconductor type hydrogen sensor detects a change in electrical characteristics of the sensitive film due to adsorption of the hydrogen gas to the sensitive film, that is, a change in resistance value. Similarly to the contact combustion type, the semiconductor type hydrogen sensor is used in a state of being heated by a heater. As described above, in the conventional hydrogen sensor such as the contact combustion method and the semiconductor method, since heating is performed, there has been a risk of the hydrogen gas that needs a measure for explosion-proof.

Also, in recent years, a gas-chromic type hydrogen sensor has been attracting attention. The gas-chromic type hydrogen sensor includes a metal oxide such as tungsten trioxide in which a color changes due to adsorption of hydrogen, and a catalyst such as platinum that dissociates hydrogen gas into a hydrogen atom, and optically detects hydrogen gas. Since the metal oxide such as tungsten trioxide also changes the electrical characteristics by the adsorption of hydrogen, the gas-chromic type hydrogen sensor can also electrically detect the hydrogen gas. (See, for example, Patent Document 1)

### Citation List

### Patent Document

Patent Document 1: Japanese Patent No. 4496204

### Summary of Disclosure

### Technical Problem

In the wireless tag described in Patent Document 1, when the resonant circuit receives a wireless signal at the resonant frequency, it induces an alternating current, which is stored as starting power and transmits data. On the other hand, in wireless tags, when hydrogen comes into contact with tungsten oxide, the tungsten oxide becomes conductive, causing a short-circuit in the antenna coil. This changes the inductance, and consequently, the resonant frequency of the resonant circuit also changes. As a result, even if a wireless signal is received, no alternating current is induced, and data is not transmitted. As described above, the wireless tag determines the presence or absence of hydrogen based on the presence or absence of the response, in response to the transmitted wireless signal, from the wireless tag. However, the wireless tags described above can only detect the presence or absence of hydrogen.

The present disclosure has been made in view of the above circumstances, and a main object thereof is to provide a hydrogen sensor capable of monitoring the hydrogen concentration.

### Solution to Problem

One embodiment of the present disclosure provides a hydrogen sensor comprising: a substrate; a sensitive film that is disposed on a first surface of the substrate, and that includes a catalyst dissociating hydrogen molecules, and tungsten oxide; a pair of electrodes disposed on the first surface of the substrate so as to be in contact with the sensitive film; and an IC tag connected to the pair of electrodes, wherein the IC tag includes an IC chip, an antenna connected to the IC chip, and a pair of terminals for sensor connected to the IC chip, and respectively connected to the pair of electrodes; the IC chip is an open short type in which the IC chip determines a high resistance state when a resistance value between the terminals for sensor is equal to or more than a first threshold resistance value, and the IC chip determines a low resistance state when the resistance value between the terminals for sensor is equal to or less than a second threshold resistance value less than the first threshold resistance value; and when a hydrogen concentration is zero, the resistance value between the terminals for sensor is equal to or more than the first threshold resistance value, and when the hydrogen concentration is a set value, the resistance value between the terminals for sensor is equal to or less than the second threshold resistance value.

Another embodiment of the present disclosure provides a hydrogen detection system using the hydrogen sensor described above.

Another embodiment of the present disclosure provides a hydrogen pipeline using the hydrogen detection system described above.

### Advantageous Effects of Disclosure

The hydrogen sensor in the present disclosure exhibits effects that it is capable of monitoring the hydrogen concentration.

### Brief Description of Drawings

[FIG. 1] is a schematic plan view exemplifying a hydrogen sensor in the present disclosure.
[FIG. 2] is a graph exemplifying the relationship between the hydrogen concentration and the resistance value between the terminals for sensor in the hydrogen sensor in the present disclosure.
[FIG. 3] this a graph exemplifying the relationship between the hydrogen concentration and the resistance value between the terminals for sensor in a hydrogen sensor that does not correspond to the embodiment of the present disclosure.
[FIG. 4] is a schematic plan view exemplifying a hydrogen sensor in the present disclosure.
[FIG. 5] is a schematic plan view exemplifying a hydrogen sensor in the present disclosure.
[FIG. 6] is a schematic plan view exemplifying a hydrogen sensor in the present disclosure.
[FIG. 7] is a schematic plan view exemplifying a hydrogen sensor in the present disclosure.
[FIG. 8] is a schematic plan view exemplifying a hydrogen sensor in the present disclosure.
[FIG. 9] is a schematic plan view exemplifying a hydrogen sensor in the present disclosure.
[FIG. 10] is a schematic plan view exemplifying a hydrogen sensor in the present disclosure.
[FIG. 11] is a schematic plan view exemplifying a hydrogen sensor in the present disclosure.
[FIG. 12] is a schematic plan view exemplifying a hydrogen sensor in the present disclosure.
[FIG. 13] is a schematic plan view exemplifying a hydrogen sensor in the present disclosure.
[FIG. 14] is a schematic plan view exemplifying a hydrogen sensor in the present disclosure.
[FIG. 15] is a schematic view exemplifying a hydrogen detection system in the present disclosure.
[FIG. 16] is a schematic view exemplifying a hydrogen detection system in the present disclosure.
[FIG. 17] is a schematic view exemplifying a hydrogen detection system in the present disclosure.
[FIG. 18] is a graph showing the relationship between the hydrogen concentration and the resistance value between the terminals for sensor in the hydrogen sensor in Example 1.
[FIG. 19] is a graph showing the relationship between the hydrogen concentration and the resistance value between the terminals for sensor in the hydrogen sensor in Comparative Examples 1 and 2.

### Description of Embodiments

Embodiments in the present disclosure are hereinafter explained with reference to, for example, drawings. However, the present disclosure can be implemented in many different aspects, and is not to be construed as being limited to the description of the embodiments described below. In addition, in order to clarify the description, a width, a thickness, a shape, and the like of each member in the figures may be schematically represented as compared with the embodiment, but this is merely an example, and the interpretation of the present disclosure is not limited. Also, in the present descriptions and each drawing, for the factor same as that described in the figure already explained, the same reference sign is indicated and the detailed explanation thereof may be omitted.

Also, in the present descriptions, on the occasion of expressing an aspect wherein some member is disposed on the other member, when described as merely "on the surface side" or "on the surface", unless otherwise stated, it includes both of the following cases: a case wherein some member is disposed directly on or directly below the other member so as to be in contact with the other member, and a case wherein some member is disposed on the upper side or the lower side of the other member via yet another member.

Also, the terms "sheet", "film" and "plate" in the present specification are not distinguished from each other based only on the difference in naming. For example, the term "sheet" is used to mean that it also includes a material called a film or a plate.

Hereinafter, the hydrogen sensor, and the hydrogen detection system in the present disclosure will be described in detail.

### A. Hydrogen sensor

The hydrogen sensor in the present disclosure is a hydrogen sensor using a decrease in resistance value when a sensitive film including a catalyst and tungsten oxide reacts with hydrogen. The inventors of the present disclosure have diligently studied components for detecting changes in the resistance value of a sensitive film in such hydrogen sensors, and have focused on an open short type IC chip. The open short type IC chip is an IC chip that detects a change in resistance value by determining the state as a high resistance state when the resistance value between the terminals is equal to or more than the first threshold; and determining the state as a low resistance state when the resistance value between the terminals is equal to or less than the second threshold. When applying an open short type IC chip to a hydrogen sensor as described above, it is important to design it so that the resistance value between terminals is equal to or more than the first threshold in an air atmosphere, and the resistance value between the terminals is equal to or less than the second threshold when the hydrogen concentration in the atmosphere increases. This will allow for the detection of hydrogen leaks. In order to provide an inexpensive hydrogen sensor, it is desirable to use a commercially available open short type IC chip. However, in commercially available open short type IC chips, the first threshold value and second threshold value are preset. Therefore, it was found that simply applying an open short type IC chip to the hydrogen sensor could result in, for example, the resistance value between terminals may be equal to or less than the second threshold, or the resistance value between the terminals may not be equal to or less than the second threshold even when the hydrogen concentration in the atmosphere is high. In both air atmosphere and hydrogen atmosphere, when the resistance value between terminals is equal to or less than the second threshold, it will be determined that hydrogen is leaking even in an air atmosphere. Furthermore, even when the hydrogen concentration in the atmosphere increases, hydrogen leakage cannot be detected unless the resistance value between the terminals is equal to or less than the second threshold. The inventors of the present disclosure conducted further studies and found that the resistance value between terminals due to hydrogen concentration can be adjusted by appropriately designing the sensitive film and the pair of electrodes, such as the thickness of the sensitive film and the interval between the pair of electrodes, according to the first threshold value and second threshold value of the open short type IC chip. In other words, when applying an open short type IC chip to the hydrogen sensor described above, it was found that it is possible to design so that the resistance value between the terminals is equal to or more than the first threshold value in an air atmosphere, and the resistance value between the terminals is equal to or less than the second threshold when the hydrogen concentration in the atmosphere increases. The present disclosure is based on these findings.

Conventionally, open short type IC chips have been used to detect breaks in wiring or circuits. Aside from the reports by the inventors of the present disclosure, no other examples of hydrogen sensors using open short type IC chips have been reported.

The hydrogen sensor in the present disclosure comprises: a substrate; a sensitive film that is disposed on a first surface of the substrate, and that includes a catalyst dissociating hydrogen molecules, and tungsten oxide; a pair of electrodes disposed on the first surface of the substrate so as to be in contact with the sensitive film; and an IC tag connected to the pair of electrodes, wherein the IC tag includes an IC chip, an antenna connected to the IC chip, and a pair of terminals for sensor connected to the IC chip, and respectively connected to the pair of electrodes; the IC chip is an open short type in which the IC chip determines a high resistance state when a resistance value between the terminals for sensor is equal to or more than a first threshold resistance value, and the IC chip determines a low resistance state when the resistance value between the terminals for sensor is equal to or less than a second threshold resistance value less than the first threshold resistance value; and when a hydrogen concentration is zero, the resistance value between the terminals for sensor is equal to or more than the first threshold resistance value, and when the hydrogen concentration is a set value, the resistance value between the terminals for sensor is equal to or less than the second threshold resistance value.

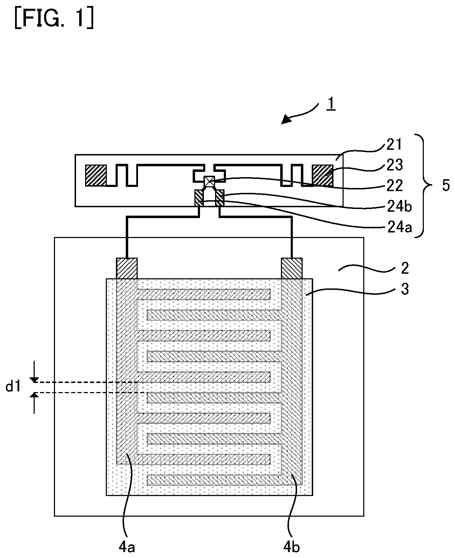

FIG. 1 is a schematic plan view illustrating an example of a hydrogen sensor in the present disclosure. As shown in FIG. 1, the hydrogen sensor 1 comprises: a substrate 2; a sensitive film 3 that is disposed on a first surface of the substrate 2, and that includes a catalyst dissociating hydrogen molecules, and tungsten oxide; a pair of electrodes 4a, 4b disposed on the first surface of the substrate 2 so as to be in contact with the sensitive film 3; and an IC tag 5 connected to the pair of electrodes 4a, 5b. In FIG. 1, the pair of electrodes 4a, 4b are a pair of comb-tooth electrodes. The pair of electrodes 4a, 4b are alternately arranged at an interval d1 capable of detecting a change in the resistance value of the sensitive film 3. Also, the IC tag 5 includes a second substrate 21; an IC chip 22 disposed on the first surface of the second substrate 21; an antenna 23 disposed on the first surface of the second substrate 21, and connected to the IC chip22; and a pair of terminals 24a, 24b for sensor disposed on the first surface of the second substrate 21, connected to the IC chip 22, and respectively connected to the pair of electrodes 4a, 4b. In the IC tag 5, the IC chip 22 is an open short type, and the IC chip determines a high resistance state when the resistance value between the terminals 24a, 24b for sensor connected to the IC chip 22 is equal to or more than the first threshold resistance value; and the IC chip determines a low resistance state when the resistance value between the terminals 24a, 24b for sensor is equal to or less than the second threshold resistance value.

The hydrogen sensor in the present disclosure is a hydrogen sensor using a decrease in resistance value when a sensitive film including a catalyst and tungsten oxide reacts with hydrogen. The operation principle of the hydrogen sensor in the present disclosure will be described.

Tungsten oxide (WO₃) has a high electrical resistance. Therefore, in an atmosphere in which no hydrogen is present, the sensitive film 3 has a high electrical resistance and an insulating property. At this time, the pair of electrodes 4a, 4b are insulated and are in a non-conductive state. Thus, even when power is supplied from the RFID reader/writer to the IC tag 5, no current flows through the pair of electrodes 4a, 4b via the sensitive film 3. In the IC chip 22, when the resistance value between the terminals 24a, 24b for sensor is equal to or more than the first threshold resistance value, it is determined as a high resistance state, and for example, the flag information becomes "0". In the IC Tag 5, the information is transmitted to the RFID reader/writer via the antenna 23. In this case, it is determined that hydrogen gas is not leaking.

On the other hand, when the hydrogen molecules come into contact with the catalyst, the hydrogen molecules are dissociated and adsorbed to generate hydrogen atoms. These hydrogen atoms reduce tungsten oxide (WO₃) to produce an indefinite ratio compound (HₓWO₃ (0 < x < 1)). Since the indefinite ratio compound (HₓWO₃) is in the mixed valence state of W⁵⁺ and W⁶⁺, the electrical resistance is low. For this reason, in an atmosphere in which hydrogen is present, a reduction reaction of the tungsten oxide occurs, and the sensitive film 3 has decreased electrical resistance and has conductivity. At this time, the pair of electrodes 4a, 4b are short-circuited to be in a conductive state. Thus, when power is supplied from the RFID reader/writer to the IC tag 5, current flows through the pair of electrodes 4a, 4b via the sensitive film 3. In the IC chip 22, when the resistance value between the terminals 24a, 24b for sensor is equal to or less than the second threshold resistance value, it is determined as a low resistance state, and for example, the flag information becomes "1". In the IC Tag 5, the information is transmitted to the RFID reader/writer via the antenna 23. In this case, it is determined that hydrogen gas is leaking.

In this way, the IC tag 5 can detect hydrogen gas by detecting a change in the resistance value between the terminals 24a, 24b for the sensor.

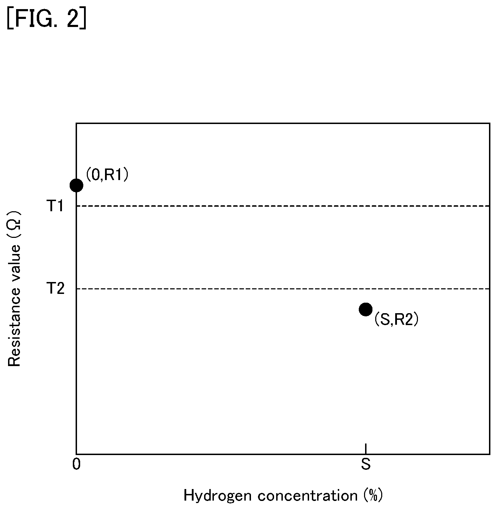

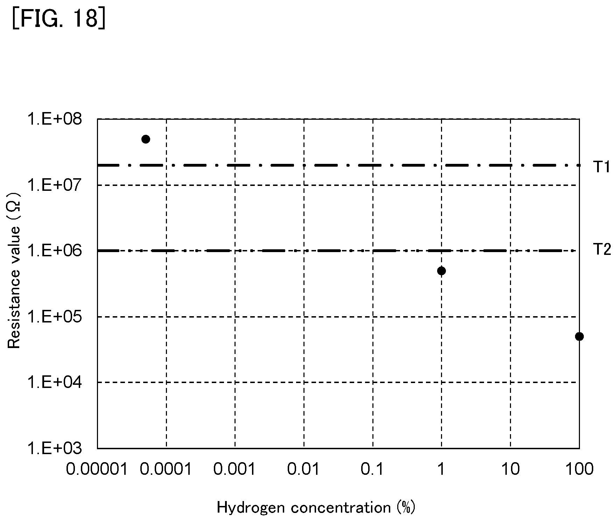

FIG. 2 is a graph showing an example of the relationship between the hydrogen concentration and the resistance value between the terminals for sensor in the hydrogen sensor in the present disclosure. In FIG. 2, T1 is the first threshold resistance value, T2 is the second threshold resistance value, and S is the set value of the hydrogen concentration. When the hydrogen concentration is zero, since the electrical resistance of the sensitive film 3 is high as described above, the pair of electrodes 4a, 4b become non-conductive state. At this time, since the resistance value R1 between the terminals 24a, 24b for sensor is equal to or more than the first threshold resistance value T1, it is determined as a high resistance state, and for example, the flag information becomes "0". On the other hand, when the hydrogen concentration increases, the electrical resistance of the sensitive film 3 decreases, and the pair of electrodes 4a, 4b become conductive state. And when the resistance value between the terminals 24a, 24b for sensor is equal to or less than the second threshold resistance value T2, it is determined as a low resistance state, and for example, the flag information becomes "1". And when the hydrogen concentration is the set value S, the resistance value R2 between the terminals 24a, 24b for sensor is equal to or less than the second threshold resistance value T2. Therefore, when the hydrogen concentration is equal to or more than the set value S, a hydrogen leak is detected. Therefore, the hydrogen sensor in the present disclosure can accurately detect hydrogen leaks when the hydrogen concentration is equal to or more than a predetermined level, and can monitor the hydrogen concentration. Incidentally, the inventors of the present disclosure investigated and found that, in a log-log graph like FIG. 18 in Examples described later, the relationship between hydrogen concentration and the resistance value between the terminals for sensor follows a linear regression.

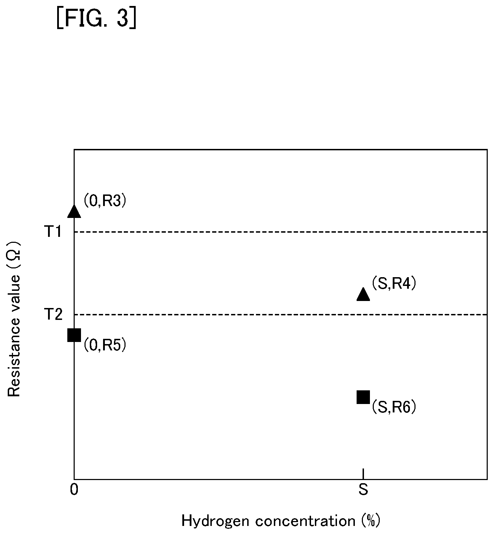

FIG. 3 is a graph showing an example of the relationship between the hydrogen concentration and the resistance value between the terminals for sensor in a hydrogen sensor that does not fall under the hydrogen sensor in the present disclosure. FIG. 3 is an example wherein, the resistance value between the terminals for sensor, when the hydrogen concentration is zero, is not equal to or more than the first threshold resistance value; and an example wherein the resistance value between the terminals for sensor, when the hydrogen concentration is a set value, is not equal to or less than the second threshold resistance value. In other words, FIG. 3 is an example of a hydrogen sensor that does not fall under the present disclosure. Firstly, in relation to the plots of black triangles, since the resistance value R3 between the terminals 24a, 24b for sensor, when the hydrogen concentration is zero, is equal to or more than the first threshold resistance value T1, for example, the flag information becomes "0". Meanwhile, when the hydrogen concentration is the set value S, since the resistance value R4 between the terminals 24a, 24b for sensor is more than the second threshold resistance value T2, for example, the flag information does not become "1". Therefore, even if the hydrogen concentration is high and hydrogen is leaking, the hydrogen leak cannot be detected. Secondly, in relation to the plots of black quadrangle, since the resistance value R5 between the terminals 24a, 24b for sensor is equal to or less than the second threshold resistance value T2 when the hydrogen concentration is zero, for example, the flag information becomes "1". Therefore, even if the hydrogen concentration is zero, it is determined that hydrogen is leaking. Therefore, in such a case, the hydrogen concentration cannot be monitored.

Therefore, by using the hydrogen sensor in the present disclosure, hydrogen leak can be accurately detected, and the hydrogen concentration can be monitored.

Also, in a conventional hydrogen sensor such as a semiconductor type or a contact combustion type, as described above, heating is required. Also, a conventional hydrogen sensor such as a contact combustion type or a semiconductor type detects hydrogen gas at a place where the hydrogen sensor is installed. Therefore, the hydrogen gas can be detected only in a narrow range such as a range of approximately 10 cm around the hydrogen sensor. For example, in a suction nozzle type hydrogen sensor, it is difficult to detect hydrogen gas if the nozzle does not point precisely toward the location of the hydrogen leak, and it requires the operator to be proficient.

On the other hand, the reduction reaction of the tungsten oxide does not require the supply of electricity. Thus, the hydrogen sensor in the present disclosure can have a large area, and can detect hydrogen gas in a relatively wide range at a low cost. Therefore, by using the hydrogen sensor in the present disclosure, it is possible to detect leakage of hydrogen gas not only in a small device such as a fuel cell but also in a large facility such as a hydrogen production facility, a hydrogen pipeline, a transport tanker, a storage tank, a hydrogen power generation facility, and a hydrogen station.

Furthermore, in the wireless tag described in Patent Document 1, the circuit configuration becomes complex in order to detect fluctuations in the resonant frequency of the resonant circuit, resulting in high production costs. In contrast, in the hydrogen sensor in the present disclosure, by using the open short type IC chip described above, the circuit configuration can be simplified, and production costs can be reduced.

The hydrogen sensor in the present disclosure is hereinafter described for each configuration.

### 1. Properties of hydrogen sensor

In the hydrogen sensor in the present disclosure, in a case where the IC chip is an open short type in which the state changes to a high resistance state when the resistance value between the terminals for sensor is equal to or more than the first threshold resistance value, and to a low resistance state when the resistance value between the terminals for sensor is equal to or less than the second threshold resistance value less than the first threshold resistance value; the resistance value between the terminals for sensor, when the hydrogen concentration is zero, is equal to or more than the first threshold resistance value, and the resistance value between the terminals for sensor, when the hydrogen concentration is the set value, is equal to or less than the second threshold resistance value.

In the hydrogen sensor in the present disclosure, the resistance value between the terminals for sensor, when the hydrogen concentration is zero, is equal to or more than the first threshold resistance value. Here, the hydrogen concentration in the air is approximately 0.00005%. Therefore, in the present specification, the case where the hydrogen concentration is zero is a concept that includes the case where the hydrogen concentration is 0.00005% or less.

Also, in the hydrogen sensor in the present disclosure, the resistance value between the terminals for sensor, when the hydrogen concentration is the set value, is equal to or less than the second threshold resistance value. When the set value of the hydrogen concentration is 1%, for example, the difference between the resistance value between the terminals for sensor when the hydrogen concentration is the set value, and the second threshold resistance value, when the second threshold resistance value is regarded as 100%, is preferably 1% or more of the second threshold resistance value, more preferably 5% or more of the second threshold resistance value, and further preferably 10% or more of the second threshold resistance value. The properties of the IC chips may vary. Therefore, in view of safety, the difference is preferably in the above range. Meanwhile, when the set value of the hydrogen concentration is 1%, for example, the difference between the resistance value between the terminals for sensor when the hydrogen concentration is the set value, and the second threshold resistance value, when the second threshold resistance value is regarded as 100%, is preferably 20% or less of the second threshold resistance value, more preferably 15% or less of the second threshold resistance value, and further preferably 10% or less of the second threshold resistance value. When the difference is too large, the resistance value between the terminals for sensor, when the hydrogen concentration is much less than the set value, may also be equal to or less than the second threshold resistance value, and it may be difficult to monitor the hydrogen concentration. Specifically, when the set value of the hydrogen concentration is 1%, the difference between the resistance value between the terminals for sensor when the hydrogen concentration is the set value, and the second threshold resistance value, when the second threshold resistance value is regarded as 100%, is preferably 1% or more and 20% or less of the second threshold resistance value, and more preferably 5% or more and 15% or less of the second threshold resistance value.

The resistance value between the terminals for sensor, at a predetermined hydrogen concentration, is determined by the following method. First, the IC tag is removed from the hydrogen sensor. Then, while exposing the hydrogen sensor to an atmosphere of the predetermined hydrogen concentration, the impedance of the pair of electrodes that were respectively connected to the pair of terminals for sensor of the IC tag, is measured at a frequency of 20 kHz using an LCR meter, and the resistance value between the pair of electrodes is determined from the impedance. The measurement is carried out for 5 times, and the average value of the three measurement values obtained by excluding the maximum value and minimum value from the five measurement values is regarded as the resistance value between the terminals for sensor at the predetermined hydrogen concentration.

As described above, the hydrogen concentration in the air is approximately 0.00005% so that the case where the hydrogen concentration is zero includes the case where the hydrogen concentration is 0.00005% or less. Therefore, when measuring the resistance value between the terminals for sensor when the hydrogen concentration is zero, the hydrogen sensor may be exposed to the air.

Furthermore, when measuring the resistance value between the terminals for sensor when the hydrogen concentration is the set value, to expose the hydrogen sensor to an atmosphere of the predetermined hydrogen concentration, the hydrogen sensor is sealed in a sealed gas chamber connected to a gas mixing device via gas piping. As the gas mixing device, for example, a gas mixing device with a flow meter from KOFLOC Corp. is used. This enables accurate, safe and reproducible mixing of hydrogen with air at any concentration. Although the reaction of the hydrogen sensor to hydrogen is very fast, the process of saturation of the resistance value takes time, so it is preferable to maintain the atmosphere of the predetermined hydrogen concentration for at least 10 minutes. The sealed gas chamber is preferably a metal sealed gas chamber including a transparent glass or resin window at a part thereof and resin or rubber packing, wherein the structure thereof does not interrupt the communication of the RFID. This allows for the evaluation of not only IC tag-separated hydrogen sensors, where the IC tag and the substrate provided with a sensitive film and a pair of electrodes are separate components, but also IC tag-integrated hydrogen sensors, where the IC tag and the substrate provided with a sensitive film and a pair of electrodes are integrated into a single unit. Also, a sealed gas chamber with, for example, a cylindrical shape with a diameter of 100 mm φ and a height of 20 mm may be used. A transparent window, for example, a glass plate with a thickness of 5 mm or an acrylic plate with a thickness of 5 mm can be used. Silicone rubber, fluorine rubber, and nitrile rubber can be used for the packing. The gas piping may be a resin or rubber flexible piping, or a metal fixed piping. For the gas piping, a stainless steel piping or polypropylene piping can be used. Also, for the gas piping, for example, a pipe of 5 mm φ or more and 10 mm φ or less can be used. The LCR meter is installed outside the sealed gas chamber through electrical wiring via the gasket. The details of the measurement conditions will be described in the section of Examples later.

In the hydrogen sensor in the present disclosure, examples of the method for adjusting the resistance value between the terminals for sensor, when the hydrogen concentration is zero, may include adjusting the interval between a pair of electrodes, such as the interval between a pair of comb-tooth electrodes; and adjusting the thickness of the sensitive film. When the interval between the pair of comb-tooth electrodes increases, the resistance value between the terminals for sensor when the hydrogen concentration is zero tends to increase, whereas when the interval between the pair of comb-tooth electrodes decreases, the resistance value between the terminals for sensor when the hydrogen concentration is zero tends to decrease. Also, when the thickness of the sensitive film increases, the resistance value between the terminals for sensor when the hydrogen concentration is zero tends to increase, whereas when the thickness of the sensitive film decreases, the resistance value between the terminals for sensor when the hydrogen concentration is zero tends to decrease.

The method for adjusting the resistance value between the terminals for sensor, when the hydrogen concentration is the set value, is similar to the method for adjusting the resistance value between the terminals for sensor, when the hydrogen concentration is zero, described above. When the interval between the pair of comb-tooth electrodes increases, the resistance value between the terminals for sensor when the hydrogen concentration is the set value tends to increase, whereas when the interval between the pair of comb-tooth electrodes decreases, the resistance value between the terminals for sensor when the hydrogen concentration is the set value tends to decrease. Also, when the thickness of the sensitive film increases, the resistance value between the terminals for sensor when the hydrogen concentration is the set value tends to increase, whereas when the thickness of the sensitive film decreases, the resistance value between the terminals for sensor when the hydrogen concentration is the set value tends to decrease.

As described above, hydrogen gas has an explosion limit concentration of 4% to 75%. Therefore, the set value of the hydrogen concentration is less than 4%. Taking safety into consideration, the set value of the hydrogen concentration is preferably, for example, 2% or less, and more preferably 1% or less. On the other hand, if the set value of the hydrogen concentration is too low, even extremely low concentration that would not cause an explosion may be determined as a hydrogen leak. Therefore, the set value of the hydrogen concentration is preferably, for example, 1% or more. That is, the set value of the hydrogen concentration is preferably, for example, 1% or more and less than 4%, more preferably 1% or more and 2% or less, and particularly preferably 1%.

The set value of the hydrogen concentration is determined by the following method. As described above, hydrogen sensor either determine that no hydrogen gas is leaking or that hydrogen gas is leaking. Firstly, the hydrogen sensor is enclosed in a sealed gas chamber connected to a gas mixture device via gas piping. The gas mixing device, the sealed gas chamber and gas piping are as described above. The IC tag may be installed inside the sealed gas chamber, and may be installed outside the sealed gas chamber through electrical wiring via the gasket. The setting temperature is 25°C. The target fluids are hydrogen and air. The flow rate of the mixture gas of hydrogen and air is set so as to be 10 mL/minute at all times. Then, in the sealed gas chamber, the mixture ratio of hydrogen and air is set so that the hydrogen is 0%, that is, air is 100%. Then, in the sealed gas chamber, the hydrogen concentration is adjusted so as to be an arbitrary concentration. Initially, the hydrogen concentration is adjusted so as to be 0.1%. As described above, although the reaction of the hydrogen sensor to hydrogen is very fast, the process of saturation of the resistance value takes time, so it is preferable to maintain the atmosphere of that hydrogen concentration for at least 10 minutes. Then, whether the hydrogen sensor reacts in the atmosphere of that hydrogen concentration to detect hydrogen or not is confirmed by sending radio waves from the RFID reader/writer. After that, the sealed gas chamber is opened and maintained for 10 minutes to return to an air atmosphere. Then, in the sealed gas chamber, the hydrogen concentration is increased by 0.1% increments, and the above procedure is repeated. Then, the minimum hydrogen concentration at which a hydrogen gas leak is detected is determined. Measurements are carried out for five times, and the average value of the minimum hydrogen concentration is regarded as the set value of the hydrogen concentration.

### 2. IC tag

The IC tag in the present disclosure includes an IC chip, an antenna connected to the IC chip, and a pair of terminals for sensor connected to the IC chip, and respectively connected to the pair of electrodes. The IC chip is an open short type in which the IC chip determines a high resistance state when the resistance value between the terminals for sensor is equal to or more than a first threshold resistance value, and the IC chip determines a low resistance state when the resistance value between the terminals for sensor is equal to or less than a second threshold resistance value less than the first threshold resistance value. The IC tag is also referred to as an RF tag, an RFID tag, an electronic tag, a wireless tag, or the like. As long as it is an IC tag, hydrogen gas can be detected using RFID.

In the IC chip, the first threshold resistance value and the second threshold resistance value are not particularly limited as long as the second threshold resistance value is lower than the first threshold resistance value. The first threshold resistance value is preferably, for example, 1 MΩ or more and 20 MΩ or less, and more preferably 10 MΩ or more and 15 MΩ or less. If the first threshold resistance value is too low, changes in resistance may be detected frequently, and the hydrogen leaks may be detected frequently. Also, if the first threshold resistance value is too low, the difference between the first threshold resistance value and the second threshold resistance value becomes smaller, making the design more difficult. The difference between the first threshold resistance value and the second threshold resistance value is preferably, for example, 10 MΩ or more and 100 MΩ or less. If the difference is too small or too large, the design becomes difficult.

The first threshold resistance value and second threshold resistance value are determined by the following method. First, a fixed resistor with a previously known resistance value and a commercially available RFID reader/writer are prepared. Also, the IC tag is removed from the hydrogen sensor. The fixed resistor is connected to the pair of terminals for sensor of the IC tag, read radio wave is transmitted from the RFID reader/writer, and confirmed by the flag of the reflective transmission radio wave. In an open short type IC chip, an open ideally refers to a state wherein the load (electrical resistance, impedance) connected to the IC chip is infinite, that is, it refers a state wherein the external load connection terminals of the IC chip are released. Also, a short-circuit ideally refers to a state wherein the load (electrical resistance, impedance) connected to the IC chip is zero, that is, it refers to a state wherein the external load connection terminals of the IC chip are short-circuited with a conductor wire. However, in normal electrical circuits, since the load cannot be physically or mechanically interrupted, the resistance value equal to or more than a predetermined value is usually determined as open, and the resistance value equal to or less than a predetermined value is usually determined as short-circuit. For open, the threshold resistance value is set to a resistance value that is generally considered to be in an isolated state, and for short-circuit, to a resistance value that is generally considered to be in a conductive state. In the present disclosure, open is regarded as high resistance state and short-circuit is regarded as low resistance state. Therefore, the first threshold resistance value is set to a resistance value that can be regarded as an isolated state. Specifically, among the resistance values that can be regarded as the isolated state, the minimum value is regarded as the first threshold resistance value. Also, the second threshold resistance value is set to a resistance value that can be regarded as a conductive state. Specifically, among the resistance value that can be regarded as the conductive state, the maximum value is regarded as the second threshold resistance value. Incidentally, for commercially available IC chips, although the first threshold resistance value and second threshold resistance value are publicly available as property data, the measurement method described above is adopted since there are individual differences.

Examples of the open short type IC chip may include UCODE G2iM+ from NXP Semiconductors.

The IC tag may include an IC chip, an antenna connected to the IC chip, and a pair of terminals for sensor connected to the IC chip, and respectively connected to the pair of electrodes, and the structure of the IC tag is similar to the structure of general IC tags.

In relation to the IC tag, there are an active type that incorporates a power source (battery) and a passive type that does not incorporate a power source (battery). In particular, a passive type tag is preferable since it operates by obtaining a driving power source by receiving a radio wave supplied from the outside with an antenna, without being provided with a power supply (battery) on itself.

The IC tag is at least one. The IC tag may be one, and may be plural.

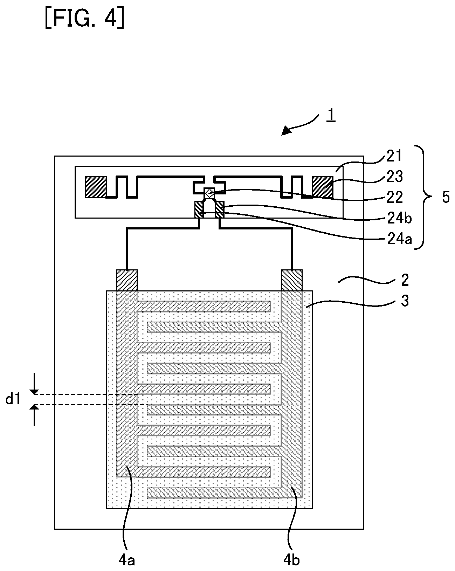

The IC tag may be integrated with or separate from the substrate provided with a sensitive film and a pair of electrodes. In FIG. 1, the IC tag 5 is separated from the substrate 2 provided with the sensitive film 3 and the pair of electrodes 4a, 4b, and they are separate bodies. On the other hand, in FIG. 4, the IC tag 5 is disposed on one surface of the substrate 1, and the IC tag 5 is integrated with the substrate 2 provided with the sensitive film 3 and the pair of electrodes 4a, 4b. When the IC tag is separate from the substrate provided with the sensitive film and the pair of electrodes, the substrate provided with the sensitive film and the pair of electrodes can be arranged in a condition where radio waves can be easily transmitted and received; such as the substrate can be directly disposed on the object to be detected for hydrogen leakage, while the IC tag can be disposed at a position away from, for example, metals that block radio waves, and the antenna can be faced directly toward the RFID reader/writer. On the other hand, when the IC tag is integrated with the substrate provided with the sensitive film and the pair of electrodes, the hydrogen sensor can be installed in a smaller space.

### 3. Sensitive film

The sensitive film in the present disclosure includes a catalyst dissociating hydrogen molecules, and tungsten oxide.

The sensitive film may be a single layer including a catalyst and tungsten oxide, and may include, in order from the substrate side, a tungsten oxide layer including tungsten oxide, and a catalyst layer including a catalyst.

When the sensitive film includes a tungsten oxide layer and a catalyst layer, the catalyst layer may be a continuous film, and may be a discontinuous film.

The catalyst is not particularly limited as long as it can dissociate hydrogen molecules into hydrogen ions (protons), and examples thereof may include noble metals such as palladium, platinum, and iridium. The catalyst may be used in one kind alone, and may be used in a combination of two kinds or more.

Tungsten oxide is tungsten trioxide (WO₃).

The sensitive film may be disposed in contact with the pair of electrodes, and the position of the sensitive film is not particularly limited. For example, the pair of electrodes, and the sensitive film may be arranged in this order on the first surface of the substrate, and the sensitive film, and the pair of electrodes may be arranged in this order on the first surface of the substrate.

When the sensitive film is a single layer including a catalyst and tungsten oxide, the thickness of the sensitive film is not particularly limited as long as it can detect a change in the resistance value of the sensitive film, and is, for example, 100 nm or more and 3000 nm or less.

On the other hand, when the sensitive film includes a tungsten oxide layer and a catalyst layer, the thickness of the tungsten oxide layer is not particularly limited as long as it is a thickness capable of detecting a change in the resistance value of the tungsten oxide layer, and is, for example, 100 nm or more and 3000 nm or less. Also, the thickness of the catalyst layer is appropriately selected according to the method for forming a catalyst layer. When the catalyst layer is formed by a vacuum deposition method, the thickness of the catalyst layer is, for example, 1 nm or more and 10 nm or less. Meanwhile, when the catalyst layer is formed by an application method, the thickness of the catalyst layer is, for example, 10 nm or more and 100 nm or less.

The area, in a plan view, of the sensitive film is not particularly limited, and is, for example, 1 cm² or more and 9 cm² or less.

When the sensitive film is a single layer including a catalyst and tungsten oxide, examples of the method for forming the sensitive film may include a sol-gel method. A method for forming a sensitive film by a sol-gel method can be referred to, for example, Japanese Patent No. 5152797 and Japanese Patent No. 5540248.

On the other hand, when the sensitive film includes a tungsten oxide layer and a catalyst layer, the method for forming the tungsten oxide layer is not particularly limited, and examples thereof may include a sol-gel method, a vacuum deposition method, a sputtering method, and an ion plating method. The method for forming the catalyst layer is also not particularly limited, and examples thereof may include deposition methods such as a vacuum deposition method, a sputtering method, and an ion plating method; and an applying method wherein a resin composition including a catalyst and a binder resin is applied.

### 4. Pair of electrodes

The pair of electrodes in the present disclosure is disposed, in contact with the sensitive film, on the first surface of the substrate. The pair of electrodes are usually arranged at an interval capable of detecting a change in the resistance value of the sensitive film. In the present specification, the "interval capable of detecting a change in the resistance value of the sensitive film" refers to an interval wherein the pair of electrodes can be short-circuited when the reduction reaction of the tungsten oxide occurs and the resistance value of the sensitive film decreases.

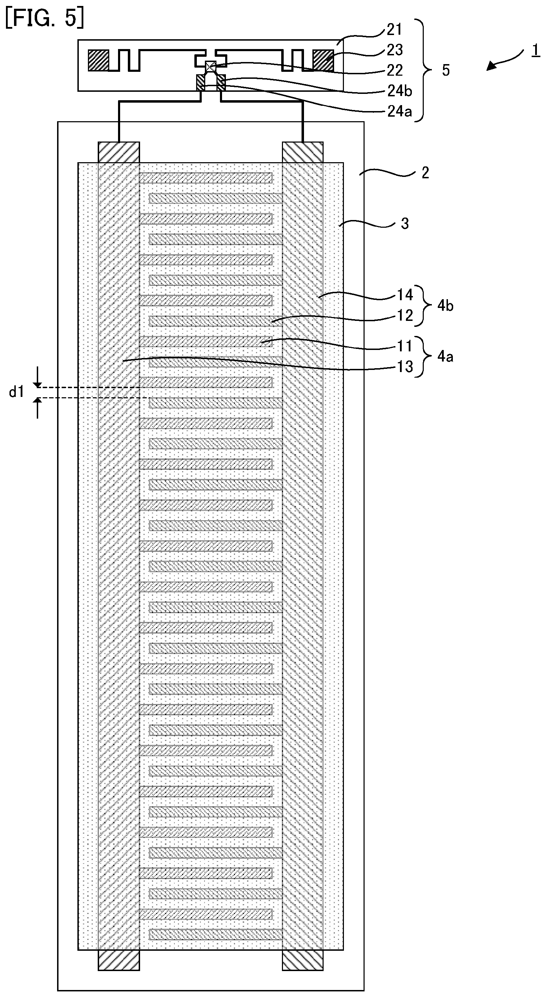

The pair of electrodes are preferably a pair of comb-tooth electrodes. Specifically, as shown in FIG. 5, the pair of electrodes 4a and 4b include a plurality of first sensor electrodes 11 and a plurality of second sensor electrodes 12; and a first bus electrode 13 connected to the first sensor electrode 11 and a second bus electrode 14 connected to the second sensor electrode 12, and the plurality of first sensor electrodes and the plurality of second sensor electrodes are preferably arranged, in contact with the sensitive film, on the first surface of the substrate and alternately at an interval capable of detecting a change in the resistance value of the sensitive film. The electrode 4a includes a plurality of first sensor electrodes 11 and a first bus electrode 13 connected to the first sensor electrodes 11. Furthermore, the electrode 4b includes a plurality of second sensor electrodes 12 and a second bus electrode 14 connected to the second sensor electrodes 12.

Examples of the conductive material used for the pair of electrodes may include carbon and a metal material. Among them, carbon is preferable. Carbon is inert to hydrogen gas and is inexpensive. As described above, when the sensitive film and the pair of electrodes are arranged in this order on the first surface of the substrate, the conductive material used for the pair of electrodes is preferably inert to the hydrogen gas. On the other hand, when the pair of electrodes, and the sensitive film are arranged in this order on the first surface of the substrate, the conductive material used for the pair of electrodes is not exposed to the hydrogen gas, and thus may be active or inert to the hydrogen gas.

The thickness of the pair of electrodes is not particularly limited as long as it is a thickness capable of functioning as an electrode, and is, for example, 0.1 µm or more and 2 µm or less.

The method for forming the pair of electrodes is not particularly limited, and examples thereof may include a method wherein a conductive film is formed and patterned, a mask vapor deposition method, and a printing method. Examples of the method for forming a conductive film may include a vacuum deposition method, a sputtering method, an ion plating method, and a plating method. Examples of the patterning method may include an etching method and a lift-off method.

The three aspects of the pair of electrodes are hereinafter exemplified.

### (1) First aspect

In the pair of electrodes in the present aspect, one of the first bus electrodes and one of the second bus electrodes are arranged in a line shape drawable with one stroke, and one end portion of the first bus electrode and one end portion of the second bus electrode are connected to the IC tag.

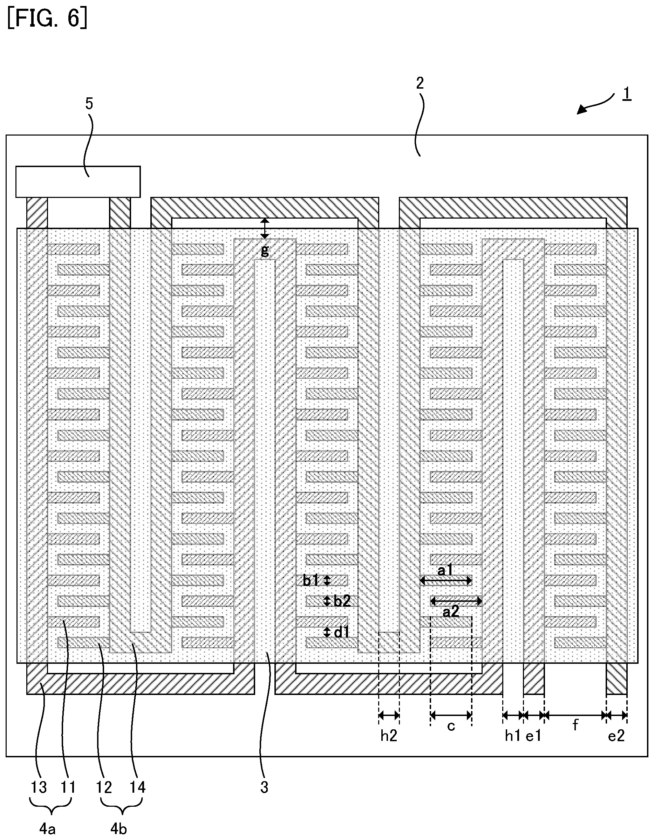

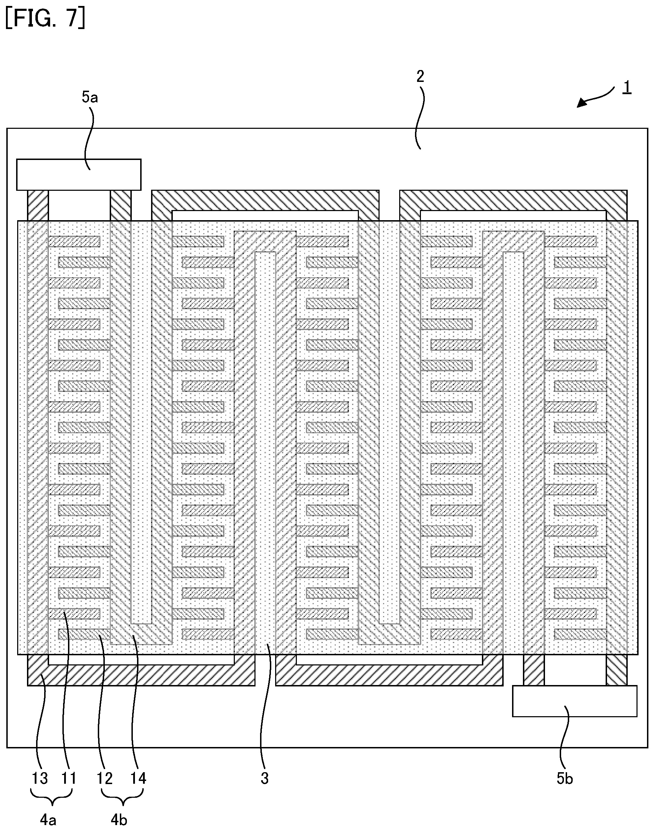

In FIG. 6 and FIG. 7, the first bus electrode 13 and the second bus electrode 14 are arranged in a line shape drawable with one stroke. Specifically, the first bus electrode 13 and the second bus electrode 14 are arranged in a meandering line shape. In FIG. 6, one end portion of the first bus electrode 13 and one end portion of the second bus electrode 14 are connected to the IC tag 5. In FIG. 7, one end portion of the first bus electrode 13 and one end portion of the second bus electrode 14 are connected to the first IC tag 5a, and the other end portion of the first bus electrode 13 and the other end portion of the second bus electrode 14 are connected to the second IC tag 5b.

The interval between the first sensor electrode and the second sensor electrode may be an interval capable of detecting a change in the resistance value of the sensitive film. The interval may be, for example, 100 µm or more, and may be 500 µm or more. As described above, when the interval is narrow, the resistance value between the terminals for sensor when the hydrogen concentration is zero tends to be low. Therefore, when the interval is too narrow, the resistance value between the terminals for sensor when the hydrogen concentration is zero may be lower than the first threshold resistance value. Also, the interval is, for example, 10 mm or less, and may be 5 mm or less. As described above, when the interval is wide, the resistance value between the terminals for sensor when the hydrogen concentration is the set value tends to be high. Therefore, when the interval is too wide, the resistance value between the terminals for sensor when the hydrogen concentration is the set value may be higher than the second threshold resistance value. That is, the interval is, for example, 100 µm or more and 10 mm or less, and may be 500 µm or more and 5 mm or less.

The interval between the first sensor electrode and the second sensor electrode refers to the distance from the end portion of the first sensor electrode to the end portion of the adjacent second sensor electrode. For example, in FIG. 6, the interval between the first sensor electrode 11 and the second sensor electrode 12 is indicated by the shortest distance d1 of the line connecting the adjacent first sensor electrode 11 and second sensor electrode 12.

The width of the first sensor electrode and the width of the second sensor electrode may be a width capable of detecting a change in the resistance value of the sensitive film. The width is, for example, 100 µm or more, and may be 500 µm or more. Also, the width is, for example, 10 mm or less, and may be 5 mm or less. That is, the width is, for example, 100 µm or more and 10 mm or less, and may be 500 µm or more and 5 mm or less. For example, in FIG. 6, the width of the first sensor electrode 11 is indicated by the length b1 in the direction orthogonal to the direction in which the first sensor electrode 11 extends. Also, the width of the second sensor electrode 12 is indicated by the length b2 in the direction orthogonal to the direction in which the second sensor electrode 12 extends.

The length of the first sensor electrode and the length of the second sensor electrode may be a length capable of detecting a change in the resistance value of the sensitive film. The length is, for example, 10 mm or more, and may be 50 mm or more. Also, the length is, for example, 500 mm or less, and may be 100 mm or less. That is, the length is, for example, 10 mm or more and 500 mm or less, and may be 50 mm or more and 100 mm or less. For example, in FIG. 6, the length of the first sensor electrode 11 is indicated by the length a1 in the direction in which the first sensor electrode 11 extends. Also, the length of the second sensor electrode 12 is indicated by the length a2 in the direction in which the second sensor electrode 12 extends.

The overlapping length of the first sensor electrode and the second sensor electrode may be a length capable of detecting a change in the resistance value of the sensitive film. The overlapping length is, for example, 9 mm or more, and may be 45 mm or more. Also, the overlapping length is, for example, 450 mm or less, and may be 90 mm or less. That is, the overlapping length is, for example, 9 mm or more and 450 mm or less, and may be 45 mm or more and 90 mm or less. For example, in FIG. 6, the overlapping length of the first sensor electrode 11 and the second sensor electrode 12 is indicated by the length c of the portion where the first sensor electrode 11 and the second sensor electrode 12 are facing each other, in the direction in which the first sensor electrode 11 and the second sensor electrode 12 extend.

The number of the first sensor electrodes and the number of the second sensor electrodes are appropriately set according to the size of the hydrogen sensor, the arrangement of the first bus electrode, the arrangement of the second bus electrode, and the like.

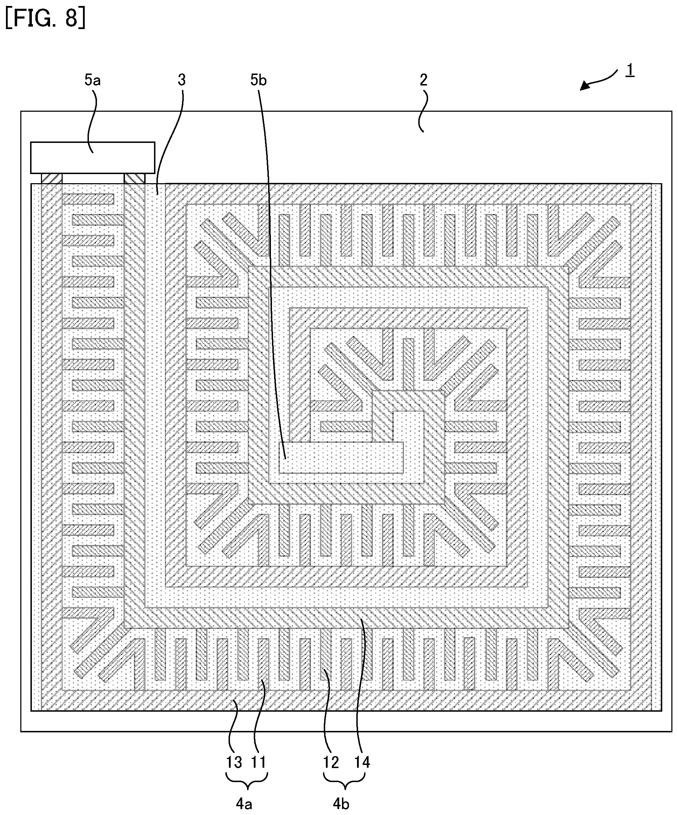

The shape of the first sensor electrode and the shape of the second sensor electrode are not particularly limited, and examples thereof may include a straight line shape, a polygonal line shape, and a curved line shape. For example, in FIG. 6, the shape of the first sensor electrode 11 and the shape of the second sensor electrode 12 are straight line shape. In addition, for example, in FIG. 8, the shape of the first sensor electrode 11 is straight line shape and polygonal line shape, and the shape of the second sensor electrode 12 is straight line shape.

The first bus electrode and the second bus electrode are arranged in a line shape drawable with one stroke. In the present specification, the term "line shape drawable with one stroke" means that the line is configured by one continuous line and does not have a portion where a line overlaps.

The line shape drawable with one stroke is not particularly limited as long as the first bus electrode, the second bus electrode, the first sensor electrode, and the second sensor electrode can be entirely disposed on the first surface of the substrate, and examples thereof may include a meandering line shape as illustrated in FIG. 6 and FIG. 7, and a spiral shape as illustrated in FIG. 8. Among these, the first bus electrode and the second bus electrode are preferably arranged in a meandering line shape. In this case, since the first bus electrode and the second bus electrode can be formed by the roll-to-roll method, the hydrogen sensor can be efficiently mass-produced.

Since the plurality of first sensor electrodes connected to the first bus electrode and the plurality of second sensor electrodes connected to the second bus electrode are alternately arranged, the first bus electrode and the second bus electrode are arranged along each other.

The width of the first bus electrode and the width of the second bus electrode may be a width capable of functioning as an electrode. The width is, for example, 1 mm or more, and may be 5 mm or more. Also, the width is, for example, 50 mm or less, and may be 10 mm or less. That is, the width is, for example, 1 mm or more and 50 mm or less, and may be 5 mm or more and 10 mm or less. For example, in FIG. 6, the width of the first bus electrode 13 is indicated by the length e1 in the direction orthogonal to the direction in which the first bus electrode 13 extends. Also, the width of the second bus electrode 14 is indicated by the length e2 in the direction orthogonal to the direction in which the second bus electrode 14 extends.

An interval between the first bus electrode and the second bus electrode facing each other sandwiching the first sensor electrode and the second sensor electrode may be an interval capable of disposing the first sensor electrode and the second sensor electrode. The interval is, for example, 11 mm or more, and may be 55 mm or more. Also, the interval is, for example, 550 mm or less, and may be 110 mm or less. That is, the interval is, for example, 11 mm or more and 550 mm or less, and may be 55 mm or more and 110 mm or less. For example, in FIG. 6, the interval between the first bus electrode 13 and second bus electrode 14 facing each other sandwiching the first sensor electrode 11 and the second sensor electrode 12 is indicated by the shortest distance f of the line connecting the first bus electrode 13 and second bus electrode 14 facing each other sandwiching the first sensor electrode 11 and the second sensor electrode 12.

The interval between the first bus electrode and the second bus electrode facing each other without sandwiching the first sensor electrode and the second sensor electrode may be an interval not capable of detecting a change in the resistance value of the sensitive film. The interval is, for example, 10 mm or more, and may be 50 mm or more. Also, the interval is, for example, 100 mm or less, and may be 70 mm or less. That is, the interval is, for example, 10 mm or more and 100 mm or less, and may be 50 mm or more and 70 mm or less. When the interval is too small, the reduction reaction of the tungsten oxide occurs, and when the resistance value of the sensitive film decreases, the first bus electrode and the second bus electrode facing each other without sandwiching the first sensor electrode and the second sensor electrode may be easily conducted. The interval is selected accordingly, depending on the thickness of the sensitive film. When the thickness of the sensitive film is thick, the first bus electrode and the second bus electrode facing each other without sandwiching the first sensor electrode and the second sensor electrode tends to be difficult to be short-circuited. Therefore, when the thickness of the sensitive film is relatively thick, the interval may be relatively small within the above range. Meanwhile, when the thickness of the sensitive film is thin, the first bus electrode and the second bus electrode facing each other without sandwiching the first sensor electrode and the second sensor electrode may be easily short-circuited. Therefore, when the thickness of the sensitive film is relatively thin, the interval is preferably relatively large within the above range. For example, in FIG. 6, the interval between the first bus electrode 13 and second bus electrode 14 facing each other without sandwiching the first sensor electrode 11 and the second sensor electrode 12 is indicated by the shortest distance g of the line connecting the first bus electrode 13 and second bus electrode 14 facing each other without sandwiching the first sensor electrode 11 and the second sensor electrode 12.

The interval between the adjacent first bus electrodes and the interval between the adjacent second bus electrodes may be an interval not capable of detecting a change in the resistance value of the sensitive film. The interval is, for example, 10 mm or more, and may be 50 mm or more. Also, the interval is, for example, 100 mm or less, and may be 70 mm or less. That is, the interval is, for example, 10 mm or more and 100 mm or less, and may be 50 mm or more and 70 mm or less. When the interval is too small, when the reduction reaction of the tungsten oxide occurs, and the resistance value of the sensitive film decreases, the adjacent first bus electrodes or the adjacent second bus electrodes may be electrically connected to each other. The interval is selected accordingly, depending on the thickness of the sensitive film. When the thickness of the sensitive film is thick, the adjacent first bus electrodes or the adjacent second bus electrodes tend to be difficult to be short-circuited. Therefore, when the thickness of the sensitive film is relatively thick, the interval may be relatively small within the above range. Meanwhile, when the thickness of the sensitive film is thin, the adjacent first bus electrodes or the adjacent second bus electrodes may be easily short-circuited. Therefore, when the thickness of the sensitive film is relatively thin, the interval is preferably relatively large within the above range. For example, in FIG. 6, the interval between adjacent first bus electrodes 13 is indicated by the shortest distance h1 connecting the adjacent first bus electrodes 13. Also, the interval between adjacent second bus electrodes 14 is indicated by the shortest distance h2 connecting the adjacent second bus electrodes 14.

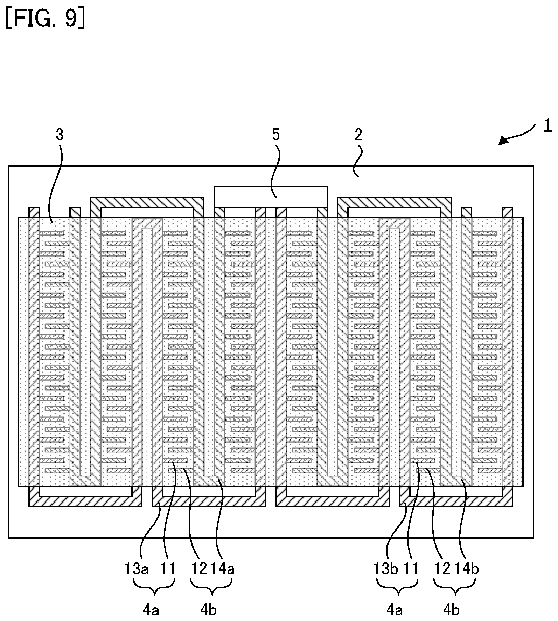

In the present aspect, the number of the first bus electrodes and the number of the second bus electrodes are usually one. Incidentally, when the first bus electrode and the second bus electrode are paired, the number of the first bus electrodes and the number of the second bus electrodes may be two. For example, in FIG. 9, the hydrogen sensor 1 includes two first bus electrodes 13a, 13b and two second bus electrodes 14a, 14b; the first bus electrode 13a and the second bus electrode 14a serve as a pair of electrodes, and the first bus electrode 13b and the second bus electrode 14b serve as a pair of electrodes.

### (2) Second aspect

In the pair of electrodes in the present aspect, the plurality of first bus electrodes and the plurality of second bus electrodes are connected to the IC tag via the flexible printed circuit.

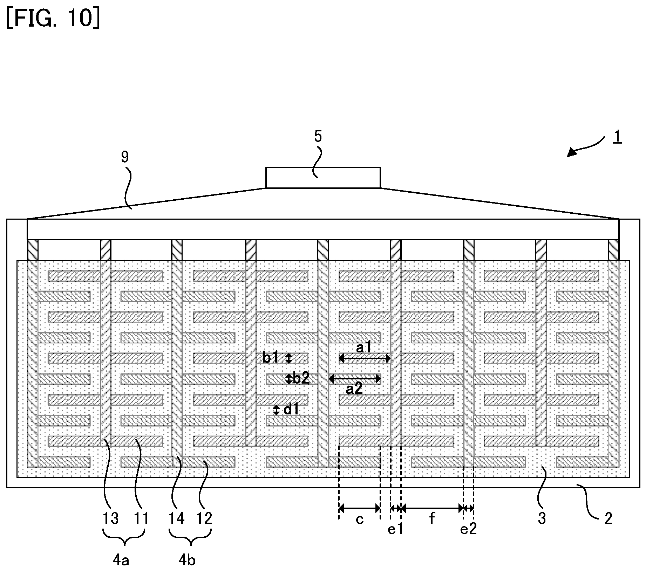

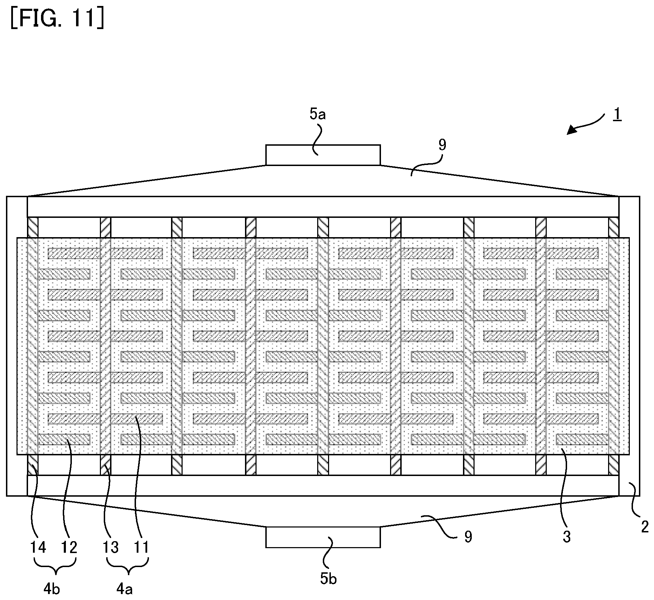

In FIG. 10, the plurality of first bus electrodes 13 and the plurality of second bus electrodes 14 are connected to the IC tag 5 via the flexible printed circuit 9. In FIG. 11, one end portion of the plurality of first bus electrode 13 and one end portion of the plurality of second bus electrode 14 are connected to the first IC tag 5a via the flexible printed circuit 9, and the other end portion of the plurality of first bus electrode 13 and the other end portion of the plurality of second bus electrode 14 are connected to the second IC tag 5b via the flexible printed circuit 9.

In the present aspect, since the first bus electrodes and the second bus electrodes can be linearly arranged, the risk of disconnection can be reduced.

The interval between the first sensor electrode and the second sensor electrode may be an interval capable of detecting a change in the resistance value of the sensitive film. The interval is, for example, 100 µm or more, and may be 500 µm or more. As described above, when the interval is narrow, the resistance value between the terminals for sensor when the hydrogen concentration is zero tends to be low. Therefore, when the interval is too narrow, the resistance value between the terminals for sensor when the hydrogen concentration is zero may be lower than the first threshold resistance value. Also, the interval is, for example, 10 mm or less, and may be 5 mm or less. As described above, when the interval is wide, the resistance value between the terminals for sensor when the hydrogen concentration is the set value tends to be high. Therefore, when the interval is too wide, the resistance value between the terminals for sensor when the hydrogen concentration is the set value may be higher than the second threshold resistance value. That is, the interval is, for example, 100 µm or more and 10 mm or less, and may be 500 µm or more and 5 mm or less.

The interval between the first sensor electrode and the second sensor electrode refers to the distance from the end portion of the first sensor electrode to the end portion of the adjacent second sensor electrode. For example, in FIG. 10, the interval between the first sensor electrode 11 and the second sensor electrode 12 is indicated by the shortest distance d1 of the line connecting the first sensor electrode 11 and adjacent second sensor electrode 12.

The width of the first sensor electrode and the width of the second sensor electrode may be a width capable of detecting a change in the resistance value of the sensitive film. The width is, for example, 100 µm or more, and may be 500 µm or more. Also, the width is, for example, 10 mm or less, and may be 5 mm or less. That is, the width is, for example, 100 µm or more and 10 mm or less, and may be 500 µm or more and 5 mm or less. For example, in FIG. 10, the width of the first sensor electrode 11 is indicated by the length b1 in the direction orthogonal to the direction in which the first sensor electrode 11 extends. Also, the width of the second sensor electrode 12 is indicated by the length b2 in the direction orthogonal to the direction in which the second sensor electrode 12 extends.

The length of the first sensor electrode and the length of the second sensor electrode may be a length capable of detecting a change in the resistance value of the sensitive film. The length is, for example, 10 mm or more, and may be 50 mm or more. Also, the length is, for example, 500 mm or less, and may be 100 mm or less. That is, the length is, for example, 10 mm or more and 500 mm or less, and may be 50 mm or more and 100 mm or less. For example, in FIG. 10, the length of the first sensor electrode 11 is indicated by the length a1 in the direction in which the first sensor electrode 11 extends. Also, the length of the second sensor electrode 12 is indicated by the length a2 in the direction in which the second sensor electrode 12 extends.

The overlapping length of the first sensor electrode and the second sensor electrode may be a length capable of detecting a change in the resistance value of the sensitive film. The overlapping length is, for example, 9 mm or more, and may be 45 mm or more. Also, the overlapping length is, for example, 450 mm or less, and may be 90 mm or less. That is, the overlapping length is, for example, 9 mm or more and 450 mm or less, and may be 45 mm or more and 90 mm or less. For example, in FIG. 10, the overlapping length of the first sensor electrode 11 and the second sensor electrode 12 is indicated by the length c of the portion where the first sensor electrode 11 and the second sensor electrode 12 are facing each other, in the direction in which the first sensor electrode 11 and the second sensor electrode 12 extend.

The number of the first sensor electrodes and the number of the second sensor electrodes are appropriately set according to the size of the hydrogen sensor, the arrangement of the first bus electrode, the arrangement of the second bus electrode, and the like.

The shape of the first sensor electrode and the shape of the second sensor electrode are not particularly limited, and examples thereof may include a straight line shape, a polygonal line shape, and a curved line shape.

The first bus electrode and the second bus electrode are a pair, and are alternately arranged.

The width of the first bus electrode and the width of the second bus electrode may be a width capable of functioning as an electrode. The width is, for example, 1 mm or more, and may be 5 mm or more. Also, the width is, for example, 50 mm or less, and may be 10 mm or less. That is, the width is, for example, 1 mm or more and 50 mm or less, and may be 5 mm or more and 10 mm or less. For example, in FIG. 10, the width of the first bus electrode 13 is indicated by the length e1 in the direction orthogonal to the direction in which the first bus electrode 13 extends. Also, the width of the second bus electrode 14 is indicated by the length e2 in the direction orthogonal to the direction in which the second bus electrode 14 extends.

The interval between the first bus electrode and the second bus electrode may be an interval capable of disposing the first sensor electrode and the second sensor electrode. The interval is, for example, 11 mm or more, and may be 55 mm or more. Also, the interval is, for example, 550 mm or less, and may be 110 mm or less. That is, the interval is, for example, 11 mm or more and 550 mm or less, and may be 55 mm or more and 110 mm or less. For example, in FIG. 10, the interval between the first bus electrode 13 and second bus electrode 14 is indicated by the shortest distance f of the line connecting the first bus electrode 13 and second bus electrode 14 facing each other sandwiching the first sensor electrode 11 and the second sensor electrode 12.

The number of the first bus electrodes and the number of the second bus electrodes are plural. The first bus electrode and the second bus electrode may be a pair, and the number of the first bus electrodes and the number of the second bus electrodes may be the same or different. For example, in FIG. 10, four first bus electrodes 13 and five second bus electrodes 14 are provided, and the number of the first bus electrodes and the number of the second bus electrodes are different.

The plurality of first bus electrodes and the plurality of second bus electrodes are connected to the IC tag via the flexible printed circuit (FPC). A general FPC can be used as the FPC.

### (3) Third aspect

In the pair of electrodes in the present aspect, the plurality of first bus electrodes are arranged along the first direction, and the plurality of second bus electrodes are arranged along the second direction orthogonal to the first direction. In the present aspect, the IC tag includes a third IC tag connected to one end portion of the plurality of the first bus electrodes, and a fourth IC tag connected to one end portion of the plurality of the second bus electrodes, and an insulating film is disposed between the first bus electrode and the second bus electrode in a region where the first bus electrode and the second bus electrode intersect.

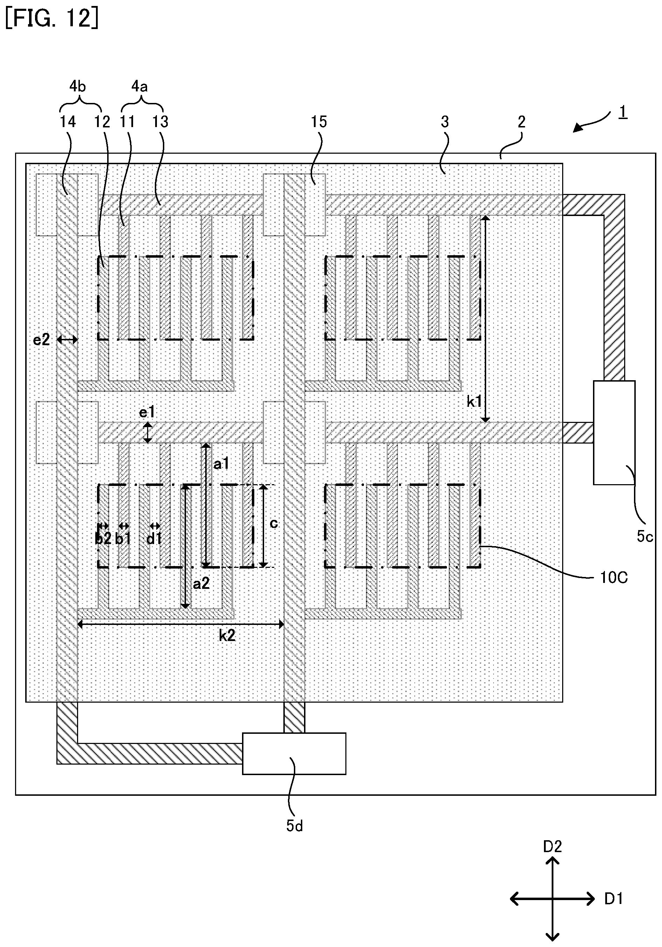

In FIG. 12, the plurality of first bus electrodes 13 are linearly arranged in the first direction D1, and the plurality of second bus electrodes 14 are linearly arranged in the second direction D2 orthogonal to the first direction D1. The IC tag includes a third IC tag 5c connected to one end portion of the plurality of first bus electrodes 13, and a fourth IC tag 5d connected to one end portion of the plurality of second bus electrodes 14. In a region where the first bus electrode 13 and the second bus electrode 14 intersect, an insulating film 15 is disposed between the first bus electrode 13 and the second bus electrode 14.

In the present aspect, since it is not necessary to arrange the first bus electrode and the second bus electrode in a line shape drawable with one stroke, the risk of disconnection can be reduced. Further, as shown in FIG. 12, since the area of the portion 10C where the first sensor electrode 11 and the second sensor electrode 12 overlap can be made constant, the variation of the signal is reduced, and the detection sensitivity is improved.

The interval between the first sensor electrode and the second sensor electrode may be an interval capable of detecting a change in the resistance value of the sensitive film. The interval is, for example, 100 µm or more, and may be 500 µm or more. As described above, when the interval is narrow, the resistance value between the terminals for sensor when the hydrogen concentration is zero tends to be low. Therefore, when the interval is too narrow, the resistance value between the terminals for sensor when the hydrogen concentration is zero may be lower than the first threshold resistance value. Also, the interval is, for example, 10 mm or less, and may be 5 mm or less. As described above, when the interval is wide, the resistance value between the terminals for sensor when the hydrogen concentration is the set value tends to be high. Therefore, when the interval is too wide, the resistance value between the terminals for sensor when the hydrogen concentration is the set value may be higher than the second threshold resistance value. That is, the interval is, for example, 100 µm or more and 10 mm or less, and may be 500 µm or more and 5 mm or less.

The interval between the first sensor electrode and the second sensor electrode refers to the distance from the end portion of the first sensor electrode to the end portion of the adjacent second sensor electrode. For example, in FIG. 12, the interval between the first sensor electrode 11 and the second sensor electrode 12 is indicated by the shortest distance d1 of the line connecting the first sensor electrode 11 and adjacent second sensor electrode 12.

The width of the first sensor electrode and the width of the second sensor electrode may be a width capable of detecting a change in the resistance value of the sensitive film. The width is, for example, 100 µm or more, and may be 500 µm or more. Also, the width is, for example, 10 mm or less, and may be 5 mm or less. That is, the width is, for example, 100 µm or more and 10 mm or less, and may be 500 µm or more and 5 mm or less. For example, in FIG. 12, the width of the first sensor electrode 11 is indicated by the length b1 in the direction orthogonal to the direction in which the first sensor electrode 11 extends. Also, the width of the second sensor electrode 12 is indicated by the length b2 in the direction orthogonal to the direction in which the second sensor electrode 12 extends.

The length of the first sensor electrode and the length of the second sensor electrode may be a length capable of detecting a change in the resistance value of the sensitive film. The length is, for example, 10 mm or more, and may be 50 mm or more. Also, the length is, for example, 500 mm or less, and may be 100 mm or less. That is, the length is, for example, 10 mm or more and 500 mm or less, and may be 50 mm or more and 100 mm or less. For example, in FIG. 12, the length of the first sensor electrode 11 is indicated by the length a1 in the direction in which the first sensor electrode 11 extends. Also, the length of the second sensor electrode 12 is indicated by the length a2 in the direction in which the second sensor electrode 12 extends.

The overlapping length of the first sensor electrode and the second sensor electrode may be a length capable of detecting a change in the resistance value of the sensitive film. The overlapping length is, for example, 9 mm or more, and may be 45 mm or more. Also, the overlapping length is, for example, 450 mm or less, and may be 90 mm or less. That is, the overlapping length is, for example, 9 mm or more and 450 mm or less, and may be 45 mm or more and 90 mm or less. For example, in FIG. 12, the overlapping length of the first sensor electrode 11 and the second sensor electrode 12 is indicated by the length c of the portion where the first sensor electrode 11 and the second sensor electrode 12 are facing each other, in the direction in which the first sensor electrode 11 and the second sensor electrode 12 extend.

The number of the first sensor electrodes and the number of the second sensor electrodes are appropriately set according to the size of the hydrogen sensor, the arrangement of the first bus electrode, the arrangement of the second bus electrode, and the like.

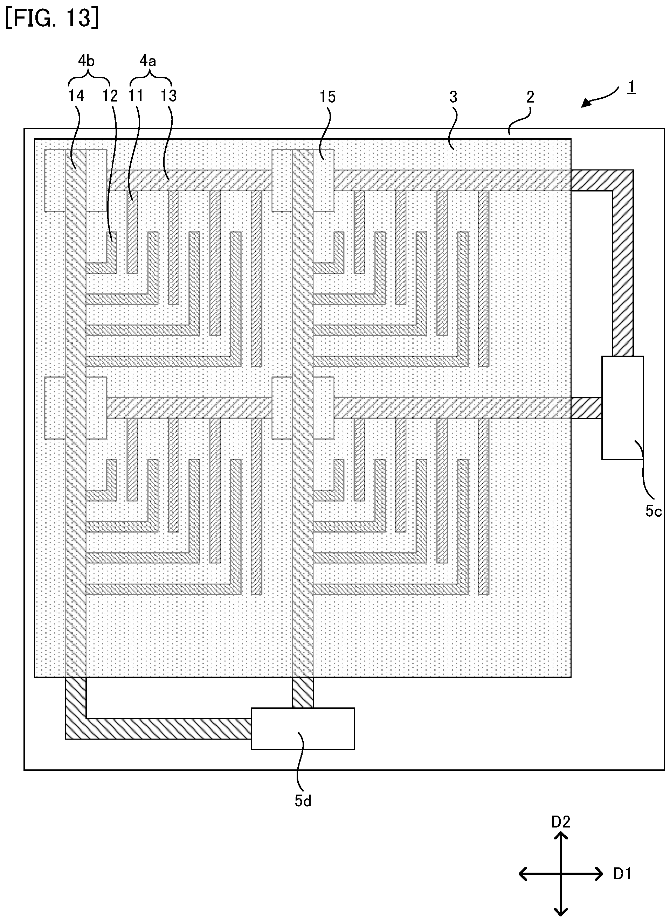

The shape of the first sensor electrode and the shape of the second sensor electrode are not particularly limited, and examples thereof may include a straight line shape, a polygonal line shape, and a curved line shape. Also, the shape of the first sensor electrode and the shape of the second sensor electrode may be a shape including a branch. For example, in FIG. 12, the shape of the first sensor electrode 11 is a straight line shape, and the shape of the second sensor electrode 12 is a shape including a branch. In addition, for example, in FIG. 13, the shape of the first sensor electrode 11 is a straight line shape, and the shape of the second sensor electrode 12 is a polygonal line shape.

The plurality of first bus electrodes are arranged along the first direction, and the plurality of second bus electrodes are arranged along the second direction orthogonal to the first direction.

The width of the first bus electrode and the width of the second bus electrode may be a width capable of functioning as an electrode. The width is, for example, 1 mm or more, and may be 5 mm or more. Also, the width is, for example, 50 mm or less, and may be 10 mm or less. That is, the width is, for example, 1 mm or more and 50 mm or less, and may be 5 mm or more and 10 mm or less. For example, in FIG. 12, the width of the first bus electrode 13 is indicated by the length e1 in the direction orthogonal to the direction in which the first bus electrode 13 extends. Also, the width of the second bus electrode 14 is indicated by the length e2 in the direction orthogonal to the direction in which the second bus electrode 14 extends.

An interval between the adjacent first bus electrodes and an interval between the adjacent second bus electrodes may be an interval capable of disposing the first sensor electrodes and the second sensor electrodes. The interval is, for example, 11 mm or more, and may be 55 mm or more. Also, the interval is, for example, 550 mm or less, and may be 110 mm or less. That is, the interval is, for example, 11 mm or more and 550 mm or less, and may be 55 mm or more and 110 mm or less. For example, in FIG. 12, the interval between the adjacent first bus electrodes 13 is indicated by the shortest distance k1 connecting the adjacent first bus electrodes 13. Also, the interval between the adjacent second bus electrodes 14 is indicated by the shortest distance k2 connecting the adjacent second bus electrodes 14.

The number of the first bus electrodes and the number of the second bus electrodes are plural.

The insulating film in the present aspect is disposed between the first bus electrode and the second bus electrode in a region where the first bus electrode and the second bus electrode intersect. The material of the insulating film is not particularly limited as long as it has insulating property, and examples thereof may include an inorganic oxide, an inorganic nitride, an inorganic carbide, and a resin. The thickness of the insulating film is not particularly limited as long as it can insulate the first bus electrode and the second bus electrode, and is, for example, 0.1 µm or more and 2 µm or less. The method for forming the insulating film is not particularly limited, and examples thereof may include a method for forming and patterning an insulating film, a mask vapor deposition method, and a printing method. Examples of the method for forming the insulating film may include a vacuum vapor deposition method, a sputtering method, an ion plating method, and a plating method. Examples of the patterning method may include an etching method and a liftoff method.

In relation to the position of the sensitive film in the present aspect, for example, the first sensor electrode, the second sensor electrode, and the sensitive film may be arranged in this order on the first surface of the substrate; the sensitive film, the first sensor electrode, and the second sensor electrode may be arranged in this order on the first surface of the substrate; the first sensor electrode, the sensitive film, and the second sensor electrode may be arranged in this order on the first surface of the substrate; and the second sensor electrode, the sensitive film, and the first sensor electrode may be arranged in this order on the first surface of the substrate.

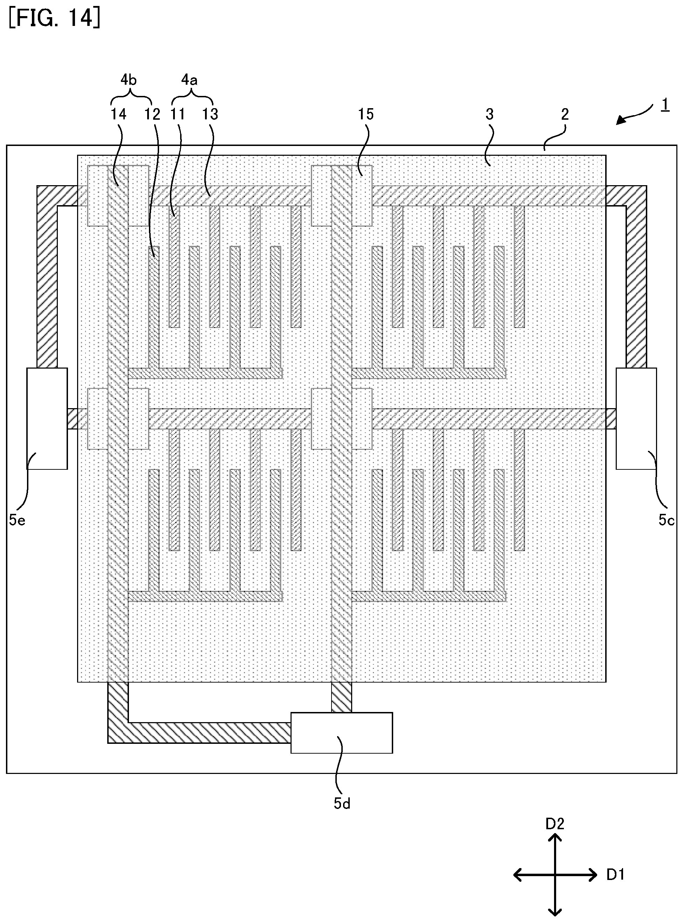

In the present aspect, the IC tag includes a third IC tag connected to one end portion of the plurality of first bus electrodes, and a fourth IC tag connected to one end portion of the plurality of second bus electrodes. In addition, the IC tag may include the third IC tag, the fourth IC tag, and a fifth IC tag connected to the other end portion of the plurality of first bus electrodes. In addition, the IC tag may include the third IC tag, the fourth IC tag, and a sixth IC tag connected to the other end portion of the plurality of second bus electrodes. In addition, the IC tag may include the third IC tag, the fourth IC tag, the fifth IC tag, and the sixth IC tag. For example, in FIG. 14, the IC tag includes a third IC tag 5c connected to one end portion of the plurality of first bus electrodes 13, a fourth IC tag 5d connected to one end portion of the plurality of second bus electrodes 14, and a fifth IC tag 5e connected to the other end portion of the plurality of first bus electrodes 13.

### 5. Substrate

The substrate in the present disclosure is a member configured to support the sensitive film and the pair of electrodes, and has insulating properties.

The substrate is not particularly limited as long as it has insulating properties, and examples thereof may include a glass substrate, a resin substrate, a ceramic substrate, and a silicon substrate including an insulating film on the surface.

The thickness of the substrate is not particularly limited, and is, for example, 10 µm or more and 2 mm or less.

### 6. Other configurations

In the present disclosure, the sensitive film, and the pair of electrodes may be disposed on the first surface of the substrate. The sensitive film and the pair of electrodes may be disposed on only one surface of the substrate, or the sensitive film and the pair of electrodes may be disposed on both surfaces of the substrate, respectively.

### B. Hydrogen detection system

In the hydrogen detection system in the present disclosure, the hydrogen sensor described above is used.

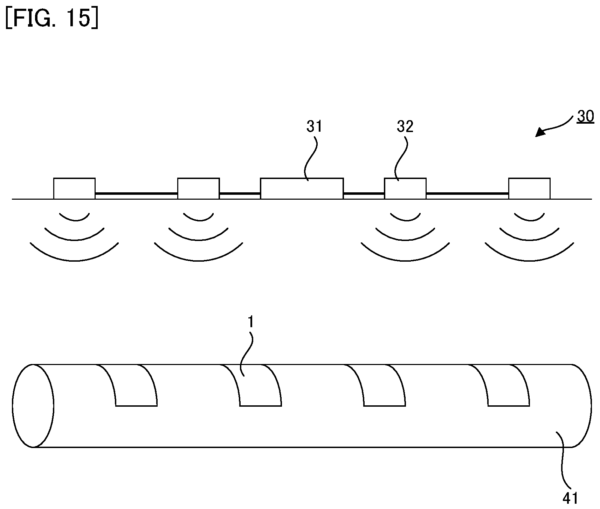

FIG. 15 is a schematic diagram illustrating an example of a hydrogen detection system in the present disclosure. In FIG. 15, the hydrogen detection system 30 includes a plurality of hydrogen sensors 1, an RFID reader/writer 31, and a plurality of antennas 32 connected to the RFID reader/writer 31. The hydrogen sensor 1 is attached to a hydrogen pipeline 41 installed underground. The RFID reader/writer 31 and the antennas 32 are installed at arbitrary place near the ground, and are fixed.

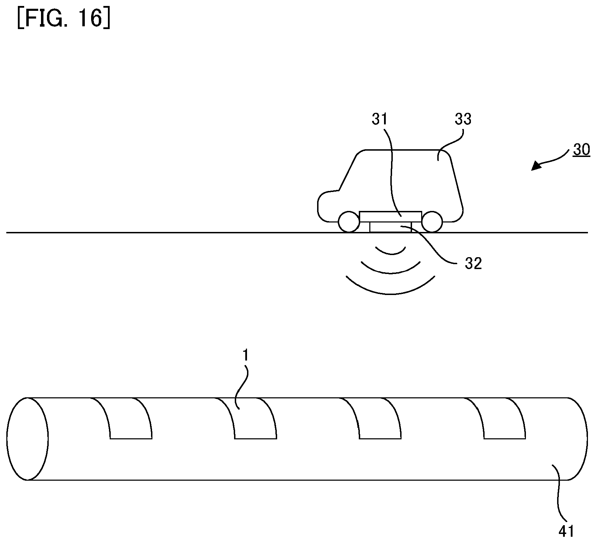

FIG. 16 is a schematic diagram illustrating another example of the hydrogen detection system in the present disclosure. In FIG. 16, the hydrogen detection system 30 includes a plurality of hydrogen sensors 1, an RFID reader/writer 31, and an antenna 32 connected to the RFID reader/writer 31. The hydrogen sensor 1 is attached to a hydrogen pipeline 41 installed underground. The RFID reader/writer 31 and the antenna 32 are installed in a moving body 33 and are movable.

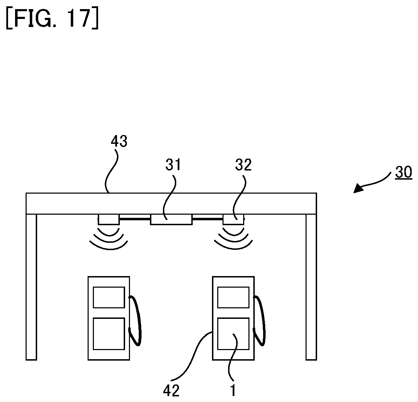

FIG. 17 is a schematic diagram illustrating another example of the hydrogen detection system in the present disclosure. In FIG. 17, the hydrogen detection system 30 is used in the hydrogen station. The hydrogen detection system 30 includes a plurality of hydrogen sensors 1, an RFID reader/writer 31, and an antenna 32 connected to the RFID reader/writer 31. The hydrogen sensor 1 is installed on a dispenser 42, which supplies hydrogen to automobiles, etc. The RFID reader/writer 31 and the antenna 32 are installed on a canopy (roof) 43 and are fixed.

In such a hydrogen detection system, the IC chip configuring the IC tag of the hydrogen sensor is driven in a non-contact manner, and thereby a change in the resistance value of the sensitive film can be detected, and the hydrogen gas can be detected.

The hydrogen detection system in the present disclosure is not particularly limited as long as it is a system using a hydrogen sensor, and is preferably a system using an RFID. Specifically, the hydrogen detection system in the present disclosure includes a hydrogen sensor, an RFID reader/writer, and an antenna connected to the RFID reader/writer.

The RFID reader/writer may be of a fixed type or a movable type. When a fixed type RFID reader/writer is used, monitoring can be carried out on a steady basis. On the other hand, when a movable RFID reader/writer is used, trace inspection can be performed, and the trace inspection can be advanced and smart, and labor-saving is possible.

The hydrogen detection system in the present disclosure can be used not only in a small device such as a fuel cell, but can also be used in a large facility such as a hydrogen production facility, a hydrogen pipeline, a transport tanker, a storage tank, a hydrogen power generation facility, and a hydrogen station. As the hydrogen pipeline, the hydrogen detection system can be used for aerial pipelines as well as underground pipelines.

Incidentally, the present disclosure is not limited to the embodiments. The embodiments are exemplification, and any other variations are intended to be included in the technical scope of the present disclosure if they have substantially the same constitution as the technical idea described in the claim of the present disclosure and offer similar operation and effect thereto.

### Examples

The present disclosure is hereinafter explained in further details with reference to Examples and Comparative Examples.

### [Example 1]

A pair of electrodes were formed on a 100 µm thick polyethylene terephthalate (PET) film by a printing method. In the pair of electrodes, the length a1 of the first sensor electrode and the length a2 of the second sensor electrode were 5 mm, the width b1 of the first sensor electrode and the width b2 of the second sensor electrode were 0.5 mm, the interval d1 between the first sensor electrode and second sensor electrode was 0.5 mm, and the width e1 of the first bus electrode and the width e2 of the second bus electrode were 0.5 mm. Also, the thickness of the pair of electrodes was 0.15 µm.

Then, referring to Tomoji Ohishi et al., Materials Sciences and Applications, "low-Temperature Formation of a WO3 Thin Film by the Sol-Gel method using Photo-Irradiation and Fabrication of a Flexible Hydrogen Sensor", 2020, 11, p.135-149, a sensitive film was formed on the PET film, by the sol-gel method, so as to cover the pair of electrodes. Specifically, tungsten hexachloride (WCl₆) from Sigma-Aldrich was used as the raw material for tungsten oxide, palladium (II) acetate from Kanto Chemical Co., Inc. was used as the catalyst, and polystyrene (degree of polymerization of 2000) from FUJIFILM Wako Pure Chemical Corporation was used as the resin binder. The tungsten oxide raw material was dissolved in ethanol and the PET film was coated with therewith to form a precursor film. The precursor film was then irradiated with ultraviolet rays with wavelengths of 254 nm and 185 nm and illumination intensity of 12 mw/cm² at 100°C for 20 minutes. Then, the catalyst was added to a toluene solution of 10 wt% polystyrene, and a solution containing 1 wt% Pd was prepared. The precursor film was coated with this Pd-containing solution, and heated at 100°C for 10 minutes. The sensitive film included a tungsten oxide layer and a catalyst layer, in order from the PET film side, the thickness of the tungsten oxide layer was 600 nm and the thickness of the catalyst layer was 90 nm.

Then, an IC tag including an IC chip (UCODE G2iM+ from NXP Semiconductors) and an antenna was produced. Specifically, an antenna was formed by adhering a copper foil to a glass epoxy substrate, and patterning the copper foil according to the design plan. The patterning of the copper foil was carried out by etching and grinding with a grinder. Then, the IC chip was mounted to connect the antenna terminal and the antenna, and the IC tag was produced. The antenna was designed to be sensitive to UHF radio waves. Then, the IC tag was connected to the pair of electrodes, and a hydrogen sensor was obtained.

### [Comparative Example 1]

A hydrogen sensor was produced in the same manner as in Example 1 except that the thickness of the tungsten oxide layer was 1.5 µm.

### [Comparative Example 2]

A hydrogen sensor was produced in the same manner as in Example 1 except that the interval d1 between the first sensor electrodes and the second sensor electrodes was 1.0 mm.

### [Evaluation]

Readout radio wave was transmitted by the UHF RFID reader/writer to the hydrogen sensor in Example 1, and it was confirmed that the reflected transmission radio wave was detected. In addition, when the radio wave was transmitted in the same manner as described above while exposing the hydrogen sensor to hydrogen gas, the signal level of the reflected transmission radio wave was changed. As a result, it was confirmed that hydrogen gas was detected without mounting a power source on the hydrogen sensor itself.

Further, the resistance value between the terminals for sensor of the hydrogen sensor, at a predetermined hydrogen concentration, was determined by the following method. First, a gas mixing device and a sealed gas chamber were connected via a gas piping. For the gas mixing device, a gas mixing device with a flow meter "GM-4B" from KOFLOC Corp. was used. For the sealed gas chamber, a metal sealed gas chamber including a transparent glass window at a part thereof and rubber packing was used. The size of the sealed gas chamber was a cylindrical shape with a diameter of 100 mm φ and a height of 20 mm. For the gas piping, a fixed stainless steel piping was used. The IC tag was removed from the hydrogen sensor and the hydrogen sensor was enclosed in the sealed gas chamber connected to the gas mixing device. An LCR meter ("IM3523" from Hiroki E.E. Corporation) was connected to the pair of electrodes that were respectively connected to the pair of terminals for sensor of the IC tag. The LCR meter was installed outside the sealed gas chamber through electrical wiring via the packing. The setting temperature was 25°C. The target fluids were hydrogen and air. The flow rate of the mixture gas of hydrogen and air was set so as to be 10 mL/minute as all times.

First, the mixture ratio of hydrogen and air was set so that the hydrogen was 0%, that is, air was 100%. Then, the hydrogen concentration in the sealed gas chamber was set to a predetermined concentration, and the hydrogen concentration was maintained for 10 minutes. Then, the impedance of the pair of electrodes, that were respectively connected to the pair of terminals for sensor of the IC tag, was measured at a frequency of 20 kHz using an LCR meter ("IM3523" from Hiroki E.E. Corporation), and the resistance value between the pair of electrodes was determined from the impedance. The measurement was carried out for 5 times, and the average value of the three measurement values obtained by excluding the maximum value and minimum value from the five measurement values was regarded as the resistance value between the terminals for sensor at the predetermined hydrogen concentration.

When the resistance value between the terminals for sensor of the hydrogen sensor, at a predetermined hydrogen concentration, was determined by changing the hydrogen concentration, the sealed gas chamber was opened and maintained for 10 minutes to return to an air atmosphere, and then, the above procedure was repeated.

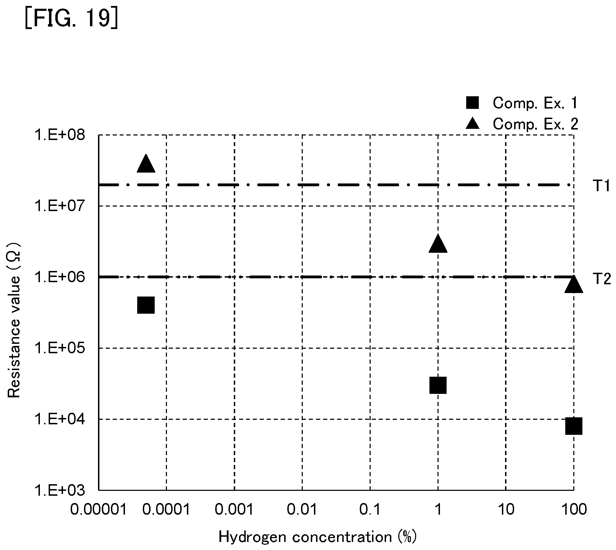

The results of the hydrogen sensor in Example 1 are shown in FIG. 18. Also, the results of the hydrogen sensors in Comparative Examples 1 to 2 are shown in FIG. 19.

In Example 1, when the hydrogen concentration was 0.00005%, the hydrogen concentration in the air, the resistance value between the terminals for sensor was equal to or more than the first threshold resistance value T1; and when the hydrogen concentration was 1%, the set value, the resistance value between the terminals for sensor was equal to or less than the second threshold resistance value T2. Meanwhile, in Comparative Example 1, since the thickness of the sensitive film was thick, when the hydrogen concentration was 0.00005%, the hydrogen concentration in the air, the resistance value between the terminals for sensor was less than the first threshold resistance value T1. Also, in Comparative Example 2, since the interval d1 between the first sensor electrode and the second sensor electrode was wide, when the hydrogen concentration was 1%, the set value, the resistance value between the terminals for sensor was higher than the second threshold resistance value T2, as shown in FIG. 19.

### Reference Signs List

- 1: hydrogen sensor
- 2: substrate
- 3: sensitive film
- 4a, 4b: a pair of electrodes
- 5: IC tag
- 11: first sensor electrode
- 12: second sensor electrode
- 13: first bus electrode
- 14: second bus electrode
- 21: second substrate
- 22: IC chip
- 23: antenna
- 24a, 24b: terminal for sensor
- 30: hydrogen detection system

## Claims

1. A hydrogen sensor comprising:
a substrate;
a sensitive film that is disposed on a first surface of the substrate, and that includes a catalyst dissociating hydrogen molecules, and tungsten oxide;
a pair of electrodes disposed on the first surface of the substrate so as to be in contact with the sensitive film; and
an IC tag connected to the pair of electrodes,
wherein
the IC tag includes an IC chip, an antenna connected to the IC chip, and a pair of terminals for sensor connected to the IC chip, and respectively connected to the pair of electrodes;
the IC chip is an open short type in which the IC chip determines a high resistance state when a resistance value between the terminals for sensor is equal to or more than a first threshold resistance value, and the IC chip determines a low resistance state when the resistance value between the terminals for sensor is equal to or less than a second threshold resistance value less than the first threshold resistance value; and
when a hydrogen concentration is zero, the resistance value between the terminals for sensor is equal to or more than the first threshold resistance value, and when the hydrogen concentration is a set value, the resistance value between the terminals for sensor is equal to or less than the second threshold resistance value.

2. The hydrogen sensor according to claim 1, wherein the set value for the hydrogen concentration is 1% or more and less than 4%.

3. The hydrogen sensor according to claim 1, wherein a difference between the resistance value between the terminals for sensor when the hydrogen concentration is the set value, and the second threshold resistance value, when the second threshold resistance value is regarded as 100%, is 1% or more and 20% or less of the second threshold resistance value.

4. A hydrogen detection system using the hydrogen sensor according to any one of claim 1 to claim 3.

5. A hydrogen pipeline using the hydrogen detection system according to claim 4.
